# EUROPEAN PATENT SPECIFICATION

(11) **EP 3 709 571 B1**
(45) Date of publication and mention of the grant of the patent: **18.09.2024**
(21) Application number: 20163181.9
(22) Date of filing: 13.03.2020
(51) Int. Cl.: H04L 12/18, H04L 41/0893

(54) **DEVICE MANAGEMENT CLUSTERING**
VORRICHTUNGSVERWALTUNGS-CLUSTERING
REGROUPEMENT DE LA GESTION DES DISPOSITIFS

(30) Priority: 14.03.2019 US 201916353583
(43) Date of publication of application: 16.09.2020
(73) Proprietor: Nokia Solutions and Networks Oy, 02610 Espoo (FI)
(72) Inventor: KOTALWAR, Jayant, CUPERTINO, CA 95014 (US); DURAI SAMY, Suresh Kannan, SUNNYVALE, CA 94089 (US)
(74) Representative: Novagraaf Technologies

(56) References cited:
- US-A1- 2008 080 438
- US-A1- 2010 205 471
- US-A1- 2015 271 016
- US-A1- 2019 095 252

## Description

### TECHNICAL FIELD

Various example embodiments relate generally to communication systems, more particularly but not exclusively, to device management in communication systems.

### BACKGROUND

Various types of devices (e.g., routers, servers, and so forth) may operate in various types of environments (e.g., communication networks, datacenters, enterprises, home networks, and so forth).

US 2008/080438 A1 concerns a method and a system for centralized cluster management.

US 2015/271016 A1 concerns configuration of networks with a server cluster device.

### SUMMARY

The scope of protection is defined by the appended claims.

### BRIEF DESCRIPTION OF THE DRAWINGS

The teachings herein can be readily understood by considering the following detailed description in conjunction with the accompanying drawings, in which:
FIG. 1 depicts an example embodiment of a communication system including a communication network and a management device configured to manage the communication network;
FIG. 2 depicts an example embodiment of a communication system configured to support creation of a router management cluster for use in router management;
FIG. 3 depicts an example embodiment of a method for use by a router in supporting creation of a router management cluster for use in router management;
FIG. 4 depicts an example embodiment of a communication system configured to support use of a router management cluster in router management;
FIG. 5 depicts an example embodiment of a method for use by a router in supporting router management for a router management cluster;
FIG. 6 depicts an example embodiment of a method for use by a router in supporting router management for a router management cluster;
FIG. 7 depicts an example embodiment of a method for use by a router in supporting router management for a router management cluster;
FIG. 8 depicts an example embodiment of a communication network configured to use router management clustering for router management; and
FIG. 9 depicts an example embodiment a computer suitable for use in performing various functions presented herein.

To facilitate understanding, identical reference numerals have been used, where possible, to designate identical elements that are common to the figures.

### DETAILED DESCRIPTION

Device management clustering is configured to enable a set of devices to be managed as a group. Device management clustering is configured to enable a set of devices to be managed as a group based on access to only one of the devices in the set of devices to be managed rather than based on access to all of the devices in the set of devices to be managed. Device management clustering is configured to enable a set of devices to be managed by a user (e.g., a human user, or a non-human user such as a device, a program, an application, or the like) as a group based on access by the user to only one of the devices in the set of devices to be managed (e.g., via login by the user to the device via an interface, such as a command-line interface (CLI) or other suitable interface, of the device) rather than based on access by the user to all of the devices in the set of devices to be managed (e.g., without a need for the user to login to any of the other devices in the set of devices to be managed). Device management clustering includes creating a device management cluster including a set of devices and performing device management for the set of devices based on the device management cluster.

Various possibilities for supporting device management clustering for routers (which also may be referred to as router management clustering) are presented. Router management clustering is configured to enable a set of routers to be managed by a user (e.g., a human user, or a non-human user such as a device, a program, an application, or the like) as a group. Router management clustering is configured to enable a set of routers to be managed by a user as a group based on login by the user to only one of the routers in the set of routers rather than to all of the routers in the set of routers to be managed. Router management clustering is configured to enable a set of routers to be managed by a user as a group via access to an interface (e.g., a CLI or other suitable interface) of only one of the routers in the set of routers rather than to all of the routers in the set of routers to be managed. Router management clustering includes creating a router management cluster including a set of routers and performing router management for the set of routers based on the router management cluster. Router management cluster creation may be performed dynamically (e.g., based on sharing of router cluster membership information between routers, such as by using extensions of existing protocols, using new protocols, or the like, as well as various combinations thereof), statically (e.g., via static configuration by a user via a management device), or the like, as well as various combinations thereof. Router management for the set of routers of the router management cluster may be performed via an interface (e.g., a CLI or other suitable interface) of one of the routers in the set of routers of the router management cluster. Router management for the set of routers of the router management cluster may be performed via an interface (e.g., a CLI or other suitable interface)of one of the routers in the set of routers of the router management cluster based on activation of a cluster management mode for the user in the interface for causing commands entered by the user to be applied to some or all of the other routers in the set of routers of the router management cluster (e.g., some or all of the routers based on one or more of explicit specification by the user via the interface, reachability of the other routers from the router being accessed, or the like, as well as various combinations thereof). In this manner, a user is able to control a set of routers based on direct access to only a single router in the set of routers without a need to explicitly access (e.g., log into or otherwise be authenticated to access) each of the routers in the set of routers. It will be appreciated, although primarily presented herein within the context of example embodiments for supporting device management clustering for routers, various example embodiments presented herein may be used or adapted for use in supporting device management clustering for various other types of devices (e.g., switches, servers, or the like). It will be appreciated that these and various other example embodiments and advantages or potential advantages of supporting router management clustering may be further understood by way of reference to the various figures, which are discussed further below.

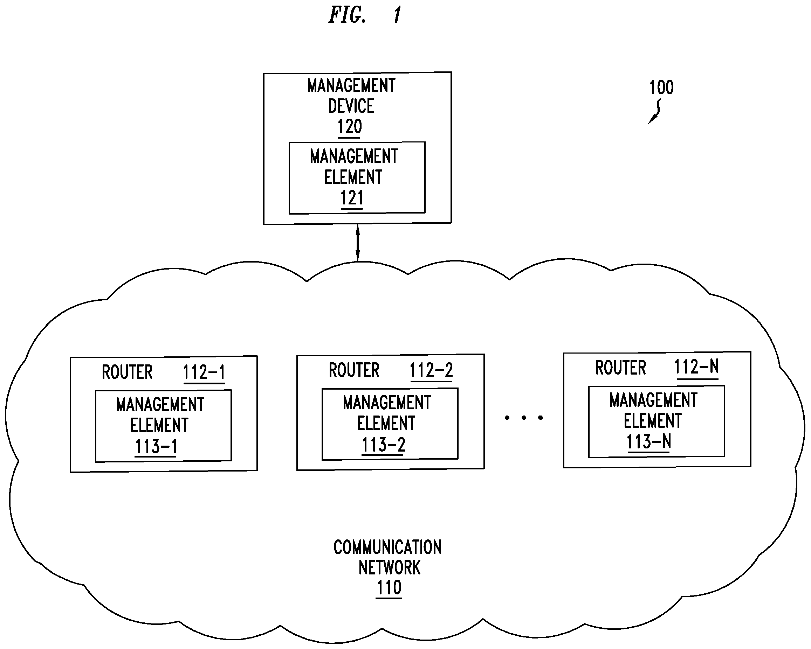

FIG. 1 depicts an example embodiment of a communication system including a communication network and a management device configured to manage the communication network.

The communication system 100, as indicated above, includes a communication network 110 and a management device 120 configured to manage the communication network 110.

The communication network 110 may include any network which may be managed by a management device 120. For example, the communication network 110 may be an operator network, an enterprise network, or the like. For example, the communication network 110 may be an access network, a core network, a backhaul network, a datacenter network, or the like. For example, the communication network 110 may be a physical communication network, a virtualized communication network (e.g., virtualized based on network function virtualization (NFV) techniques or other suitable virtualization techniques), or the like. It will be appreciated that, although primarily presented herein within the context of specific types of communication networks, various other types of communication networks may be supported.

The communication network 110 includes a set of routers 112-1 to 112-N (collectively, routers 112). The routers 112 may be configured to provide various communication services for supporting communications within communication network 110. The routers 112 may be arranged in various network topologies, which may depend on the type of communication network 110 in which the routers 112 are disposed. For example, the routers 112 may be arranged in a mesh topology (e.g., in a network operator backhaul network), in a spine-and-leaf topology (e.g., in a datacenter network), or the like. The routers 112 may be configured to be managed by the management device 120. It will be appreciated that, although primarily presented herein as including specific types devices (illustratively, routers 112), communication network 110 may include various other types of devices (e.g., switches, hubs, bridges, or the like, as well as various combinations thereof).

The management device 120 may be configured to support management of the communication network 110. The management device 120 may be configured to support management of the communication network 110 for various management purposes, at various management scales, or the like, as well as various combinations thereof. For example, the management device 120 may be configured to support configuration functions, monitoring functions, maintenance functions, or the like, as well as various combinations thereof. For example, the management device 120 may be configured to support service-level management (e.g., as a service management system or other similar system), network-level management (e.g., as a network management system (NMS) or other similar system), element-level management (e.g., as an element management system (EMS) or other similar system), or the like, as well as various combinations thereof. The management device 120 may be one of various types of devices which may be used to support management functions for communication network 110, such as a workstation of a management system configured to support management of the routers 112, a user device (e.g., a laptop, a tablet, a smartphone, or the like) configured to provide remote management access to the routers 112, a local console connected to one or more of the routers 112, or the like. It will be appreciated that the management device 120 may be configured to support various other management capabilities for managing the communication network 110.

The management device 120 is configured to manage the routers 112 of communication network 110. The management device 120 may support various capabilities which enable the management system 120 to access and manage routers 112 and, similarly, routers 112 may support various capabilities which enable access and management by the management device 120. For example, such capabilities may include management interfaces (e.g., command line interfaces (CLIs), graphical user interfaces (GUIs), or the like), management applications (e.g., router configuration applications, router status retrieval applications, or the like), management elements (e.g., devices, modules, systems, sub-systems or the like), communications capabilities (e.g., inter-process communications capabilities such as remote procedure calls (RPCs), protocols such as telnet or secure shell (SSH), or the like), or the like, as well as various combinations thereof. It will be appreciated that these capabilities may be considered to be represented in FIG. 1 by the management elements 113-1 - 113-N on routers 112-1 - 112-N, respectively, and the management element 121 on management device 120.

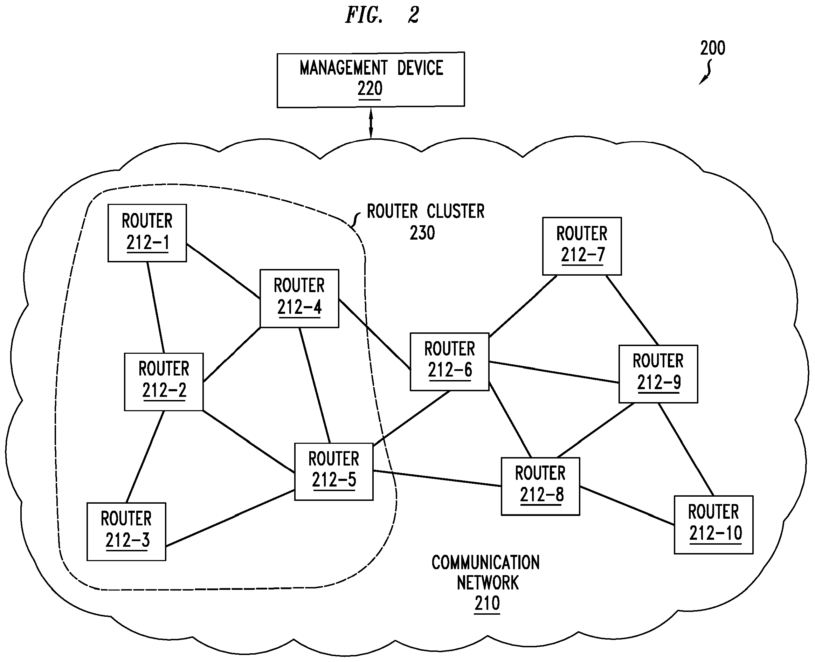

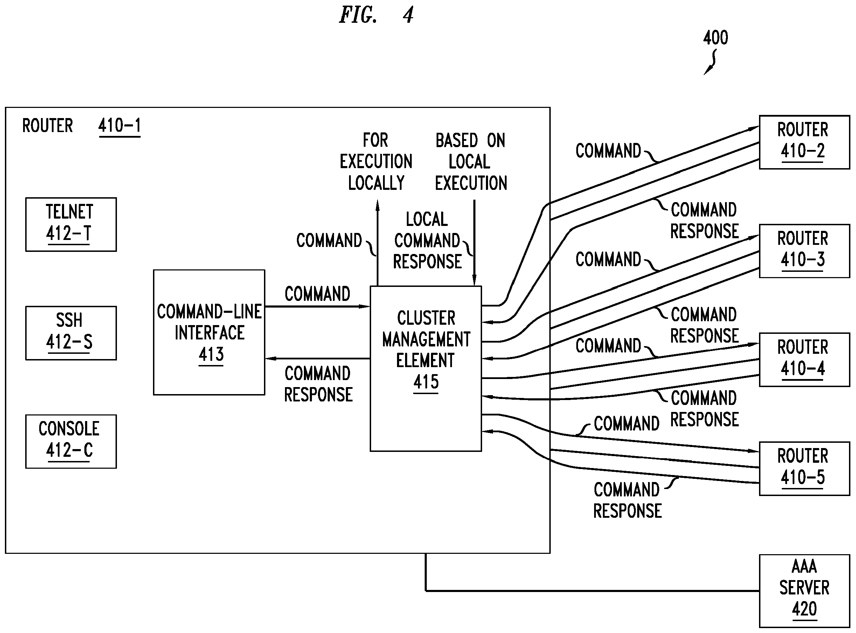

For example, the communication network 110 may be configured to support router management clustering. For example, a router 112 of the communication network 110 and the management device 120 may be configured to, and may be configured to cooperate in order to, provide router management clustering. It is noted that various possibilities for creation of a router management cluster for use in router management are presented with respect to FIGs. 2-3 and that various example embodiments for use of a router management cluster in router management are presented with respect FIGs. 4-7.

It will be appreciated that, although primarily presented with respect to specific types, numbers, and arrangements of elements, communication system 100 may include various other types, numbers and arrangements of elements.

FIG. 2 depicts a communication system configured to support creation of a router management cluster for use in router management.

The communication system 200 includes a communication network 210 including a set of routers 212-1 - 212-10 (collectively, routers 212) and also includes a management device 220. It will be appreciated that the communication system 200 may be based on and, thus, similar to the communication system 100 of FIG. 1.

The communication system 200, as indicated above, is configured to support creation of a router management cluster for use in router management. As illustrated in FIG. 2, a cluster of routers 212, which is denoted as router cluster 230, is created. The router cluster 230 includes routers 212-1, 212-2, 212-3, 212-4, and 212-5. The router cluster 230 may be defined in various ways and may be created within the communication network 210 in various ways.

The router cluster 230, as indicated above, may be defined in various ways. The router cluster 230 may be defined by the router operator (e.g., the network operator of communication network 210). The router cluster 230 may be defined based on various types of information, such as based on the context of the communication network 210 (e.g., Enterprise network, datacenter network, or the like), based on the network topology of the communication network 210 (e.g., mesh, spine-and-leaf, or the like), based on the roles of the routers 212, based on the types of management functions to be supported, or the like, as well as various combinations thereof). The router cluster 230 may be defined manually or automatically. The router cluster 230, after being defined, may be identified using a router cluster identity, which may be in the form of a cluster identifier for the router cluster 230, a cluster domain for the router cluster 230 (e.g., a domain name, such as a fully qualified domain name (FQDN), or a hostname), or the like, as well as various combinations thereof.

The router cluster 230, as indicated above, may be created within the communication network 210 in various ways. The creation of the router cluster 230 includes configuration of each of the routers 212 in the router cluster 230 with router cluster membership information so that each router 212 of the router cluster 230 knows that it belongs to the router cluster 230 (referred to herein as cluster identity information) and knows the router cluster membership of the router cluster 230 to which it belongs (referred to herein as cluster membership information). The routers 212 that belong to the router cluster 230 may be configured to be members of the router cluster 230 (e.g., configured with their cluster identity information) in various ways, may obtain the router cluster membership information for the router cluster 230 in various ways (e.g., based on various rules, protocols, or the like), may maintain the router cluster membership information for the router cluster 230 in various ways (e.g., using various formats, tables, or the like), and so forth. The creation of the router cluster 230, as indicated further below, may be performed dynamically (e.g., using various protocols, such as Zero Touch Provisioning (ZTP), Link Layer Discovery Protocol (LLDP), or the like), statically (e.g., via CLI without using dynamic protocols), or using a combination thereof.

The creation of the router cluster 230, as indicated above, includes configuration of each of the routers 212 in the router cluster 230 with cluster identity information so that each router 212 of the router cluster 230 knows that it belongs to the router cluster 230. The configuration of each of the routers 212 in the router cluster 230 with cluster identity information so that each router 212 of the router cluster 230 knows that it belongs to the router cluster 230 may be performed dynamically (e.g., using ZTP or other suitable automated provisioning protocols or mechanisms), statically (e.g., via CLI without using dynamic protocols), or a combination thereof.

The creation of the router cluster 230, as indicated above, includes configuration of each of the routers 212 in the router cluster 230 with cluster membership information so that each router 212 of the router cluster 230 knows the router cluster membership of the router cluster 230 to which it belongs. The configuration of each of the routers 212 in the router cluster 230 with cluster membership information so that each router 212 of the router cluster 230 knows the router cluster membership of the router cluster 230 to which it belongs may be performed dynamically (e.g., using LLDP or other suitable automated discovery protocols or mechanisms), statically (e.g., via CLI without using dynamic protocols), or a combination thereof.

Configuration of each of the routers 212 in the router cluster 230 with router cluster membership information of the router cluster 230 may be based on use of a dynamic protocol to distribute the router cluster membership information of the router cluster 230 to routers 212 of the router cluster 230. A router 212, after learning that it belongs to router cluster 230, can start advertising its membership within the router cluster 230 to neighboring routers 212 of the communication network 210 (e.g., to each of its links). As a result, the routers 212 learn the cluster identity information of their adjacent neighbors. As routers 212 receive cluster identity information from their adjacent neighbors, the routers 212 identify which of the adjacent neighbors belong to the router cluster 230 and store cluster membership information received from adjacent neighbors that belong to the router cluster 230 while ignoring cluster membership information received from adjacent neighbors that do not belong to the router cluster 230 (e.g., without storing or further propagating it). The routers 212 also continue to advertise router cluster membership information to their adjacent neighbors, advertising not only their own cluster identity information but the cluster membership information received from their adjacent neighbors that belong to the router cluster 230 (i.e., the full set of cluster membership information of the router cluster 230 that has been discovered by that router 212 up to that point). In this manner, the full cluster membership information of the router cluster 230 is eventually propagated to and stored by each of the routers 212 that are members of the router cluster 230. The dynamic protocol may be a link layer protocol that is configured to support advertising and discovery of link layer information, such as LLDP (e.g., LLDP may be extended to support advertisement and discovery of router cluster membership information by the routers 212) or the like.

Configuration of each of the routers 212 in the router cluster 230 with router cluster membership information of the router cluster 230 may be based on use of static configuration capabilities to configure the router cluster membership information of the router cluster 230 onto the routers 212 that belong to the router cluster 230. The configuration of the router cluster membership information of the router cluster 230 onto the routers 212 that belong to the router cluster 230 may be performed via the CLIs of the routers 212. The configuration of the router cluster membership information of the router cluster 230 onto the routers 212 that belong to the router cluster 230 may be performed via the CLIs of the routers 212 based on access to the CLIs of the routers 212 from the management device 220. It will be appreciated that configuration of each of the routers 212 in the router cluster 230 with router cluster membership information of the router cluster 230 may be based on use of various other types of static configuration capabilities capable of supporting configuration of the router cluster membership information of the router cluster 230 onto the routers 212 that belong to the router cluster 230.

The router cluster membership information that is maintained by the routers 212 of the router cluster 230 may include various types of information which may be used by the routers 212 of the router cluster 230 in supporting cluster level management of the routers 212 of the router cluster 230. The router cluster membership information that is maintained by the routers 212 of the router cluster 230 may include, for each of the routers 212 that is a member of the router cluster 230, router identification information (e.g., a router name, a router identifier, or the like), router reachability information (e.g., a reachable IP address, a port to be used, or the like), or the like, as well as various combinations thereof. It will be appreciated that the router cluster membership information that is maintained by the routers 212 of the router cluster 230 may include various other types of information which may be used by the routers 212 of the router cluster 230 in supporting cluster level management of the routers 212 of the router cluster 230.

The router cluster membership information that is maintained by the routers 212 of the router cluster 230 may be maintained and managed by the routers 212 in various ways. The router cluster membership information that is maintained by the routers 212 of the router cluster 230 may be maintained using one or more database tables or other storage devices. The router cluster membership information that is maintained by the routers 212 of the router cluster 230 may be maintained based on use of a management server subsystem, a cluster management subsystem, and an inter-process communication subsystem that is configured to support communications between the management server subsystem and the cluster management subsystem. The management server subsystem may be configured to hold configuration information for other subsystems and to provide a YANG model for operation of the router. The management server subsystem may be configured to read the router cluster management information and provide it to the cluster management subsystem for storage and management of the router cluster management information (e.g., the cluster management subsystem may hold the cluster domain name of the router cluster 230 and members of the router cluster 230 (e.g., router names of the routers, reachable IP addresses of the routers, or the like, as well as various combinations thereof) for use in performing router management for the router cluster 230. It will be appreciated that the router cluster membership information that is maintained by the routers 212 of the router cluster 230 may be maintained and managed by the routers 212 in various other ways.

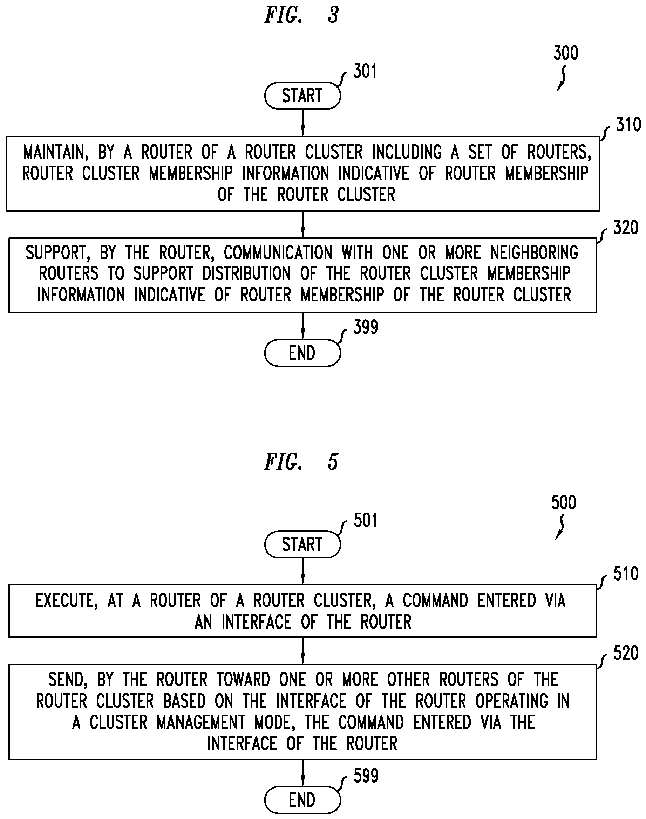

It will be appreciated that the communication system 200 may be configured to provide various other functions supporting creation of a router management cluster for use in router management. A method for use by a router in supporting creation of a router management cluster for use in router management is presented with respect to FIG. 3.

FIG. 3 depicts a method for use by a router in supporting creation of a router management cluster for use in router management. It will be appreciated that, although primarily presented as being performed serially, at least a portion of the functions of method 300 may be performed contemporaneously or in a different order than as presented with respect to FIG. 3. At block 301, method 300 begins. At block 310, maintain, by a router of a router cluster including a set of routers, router cluster membership information indicative of router membership of the router cluster. At block 320, support, by the router, communication with one or more neighboring routers to support distribution of the router cluster membership information indicative of router membership of the router cluster. At block 399, method 300 ends. It will be appreciated that various functions presented with respect to FIG. 2 may be implemented within the context of method 300 of FIG. 3.

FIG. 4 depicts a communication system configured to support use of a router management cluster in router management.

The communication system 400 includes a set of routers 410-1 - 410-5 (collectively, routers 410) and an Authentication, Authorization, and Accounting (AAA) server 420. The routers 410 are organized as a router cluster and AAA server 420 is configured to perform AAA functions for the routers 410 of the router cluster. It will be appreciated that the routers 410 of the router cluster may have a topology different than that depicted in FIG. 4, but that the routers 410 of the router cluster are depicted in this arrangement, because a user (e.g., a human user, or a non-human user such as a device, a program, an application, or the like) is using the router 410-1 to control each of the routers 410-1 - 410-5 of the router cluster, to illustrate management of the router cluster by the user based on access by the user only to router 420-1 without a need for the user to directly access routers 410-2 - 410-5 in order to control routers 410-2 - 410-5. It will be appreciated that the router cluster may be created as presented with respect to FIG. 2. It will be appreciated that the router cluster may include fewer or more routers 410 and that any of the routers 410 of the router cluster could be accessed by the user in order to control each of the routers 410 of the router cluster. It also will be appreciated that the communication network within which the routers 410 are deployed may include other routers which are not part of the router cluster (which have been omitted for purposes of clarity).

As presented in FIG. 4, the user is able to manage the routers 410 of the router cluster based on access to only router 410-1 of the router cluster without a need to directly access any of routers 410-2 - 410-5 of the router cluster. The router 410-1 supports a number of router access capabilities 412 via which the user may access the router 410 locally (illustratively, denoted as console 412-C) or remotely (illustratively, denoted as telnet 412-T and SSH 412-S) and, thus, access various router service functions of the router 410-1 (e.g., traffic routing functions, traffic monitoring functions, or the like). The router 410-1 supports a command-line interface (CLI) 414 via which the user may interact with the router 410-1 for performing various functions on the router 410-1 (including high level functions at the router system level as well as router service functions at the router service level). The user may access the CLI 413 via any of the router access capabilities 412. The router 410-1 also supports a cluster management element 415 configured to provide various cluster management functions presented herein as being supported by the router 410-1 (e.g., detecting that the CLI 413 is operating in a cluster management mode, sending commands to other routers 410-2-410-5 of the router cluster, collecting command responses from other routers 410-2-410-5 of the router cluster, and so forth, as discussed further below). It will be appreciated that the router 410-1 may be configured to run a Linux system supporting router access capabilities 412 and supporting a router Linux system which is configured to provide the router service functions based on access to the router service functions via the CLI 413. The AAA server 420 is configured to perform authentication, authorization, and accounting functions for router 410-1 (as well as routers 410-2 - 410-5 based on control of these routers via router 410-1 based on router management clustering). The communication between the router 410-1 and the AAA server 420 may be based on use of any suitable AAA protocol (e.g., Remote Authentication Dial-In User Service (RADIUS), Terminal Access Controller Access-Control System (TACACS), or the like).

As presented in FIG. 4, the routers 410 are configured to support router cluster management functions enabling the user to manage the routers 410 of the router cluster based on access by the user to only router 410-1 of the router cluster without a need for the user to directly access any of routers 410-2 - 410-5 of the router cluster. It will be appreciated that each of the routers 410 also could be controlled if the user accessed any of the routers 410-2 - 410-5 of the router cluster.

As presented in FIG. 4, the user is able to manage the router 410-1 without use of router cluster management. The user accesses the CLI 413 of the router 410 via console 412-C, telnet 412-T, or SSH 412-S. The user is authenticated by the AAA server 420 before being permitted to execute commands on router 410-1 via the CLI 413. The user enters user authentication credentials (e.g., a user ID and associated password) via the CLI 413 and the user authentication credentials are sent to AAA server 420, which determines whether the user should be given access to the router 410-1. If the AAA server 420 indicates to the router 410-1 that the user authentication credentials are invalid, the user is denied access to the router 410-1. If the AAA server 420 indicates to the router 410-1 that the user authentication credentials are valid, the user is given access to the router 410-1 (including access to operate on the router service functions of the router 410-1). If the user is successfully authenticated, a user profile may be created for the user, where the user profile of the user includes the authorization level of the user to operate on the router cluster. The user, after being authenticated by the AAA server 420 for operating on the router 410-1 via the CLI 413, may enter commands via the CLI 413. The commands entered by the user via the CLI 413 are authorized and accounted by the AAA server 420. The router 410-1 sends a command entered by the user via the CLI 413 to the AAA server 420 for authorization and accounting. The AAA server 420 receives the command from the router 410-1 and performs authorization and accounting for the command. For authorization, the AAA server 420 determines whether execution of the command on the router 410-1 is authorized and provides to the router 410-1 a response indicative as to whether execution of the command on the router 410-1 is authorized. The authorization of the command entered by the user via the CLI 413 may be based on command authorization information provided by the router 410 to the AAA server 420 for use in determining whether execution of the command on the router 410 is authorized (e.g., the command, a user identifier of user, a user session identifier of a user session of user, a terminal type via which the user accessed the CLI 413 (e.g., console, telnet, SSH, or the like), or the like, as well as various combinations thereof). The router 410-1, based on a response from the AAA server 420 that is indicative that the user is authorized to execute the command, executes the command on the router 410 and may provide an indication to the user via the CLI 413 that the command was executed (e.g., a result of execution of the command). The router 410-1, based on a response from the AAA server 420 that is indicative that the user is not authorized to execute a command, prevents execution of the command on the router 410-1 and may provide an indication to the user via the CLI 413 that the command was not executed due to lack of authorization. The AAA server 420 also performs accounting for the command entered by the user via the CLI 413 for maintaining a record of user activity on the router 410-1 (e.g., commands entered, commands executed after being authorized, commands not execute after authorization was denied, and so forth), which may be used for various activity tracking purposes (e.g., auditing, analysis, or the like). The router 410-1 also may perform accounting for the command entered by the user via the CLI 413 for maintaining a local record of user activity on the router 410-1.

As presented in FIG. 4, the user, after accessing router 410-1 of the router cluster, may attempt to manage the routers 410 of the router cluster as a group based on use of router cluster management. The user, after being authenticated to access and operate on the router 410-1 (e.g., based on interaction between router 410-1 and AAA server 420 for authentication of the user, as discussed above), may attempt to put the CLI 413 of router 410-1 into a router cluster management mode. The user may attempt to put the CLI 413 of the router 410-1 into the router cluster management mode by entering a command via the CLI 413. For example, the user may put the CLI 413 of the router 410-1 into the router cluster management mode by typing "cluster management" via the CLI 413. The router 410-1, based on a detection of an attempt by the user to put the CLI 413 in the cluster management mode, checks the authorization of the user to put the CLI 413 into the cluster management mode. The authorization of the user to put the CLI 413 into the cluster management mode may be checked based on a user profile of the user (e.g., a user profile created for the user when the user was authenticated to access the router 410-1). The authorization of the user to put the CLI 413 into the cluster management mode may be checked locally at the router 410-1 or may be checked at the AAA server 420 based on interaction between the router 410-1 and the AAA server 420. If the user is not authorized to put the CLI 413 into the cluster management mode, then the CLI 413 is prevented from entering the cluster management mode and any commands entered by the user via the CLI 413 are only executed locally on the router 410-1 that the user has accessed. If the user is authorized to put the CLI 413 into the cluster management mode, then the CLI 413 enters the cluster management mode such that the user may control the routers 410 of the router cluster as a group (e.g., commands entered by the user via the CLI 413 may be executed locally on router 410-1 as well as on some or all of the other routers 410-2 - 410-5 of the router cluster as discussed further below).

As presented in FIG. 4, the user, after accessing router 410-1 of the router cluster and putting the CLI 413 of the router 410-1 into cluster management mode, is able to manage routers 410 of the router cluster as a group based on use of router cluster management.

The router 410-1, based on a determination that the user has put the CLI 413 of the router 410-1 into the router cluster management mode, activates router cluster management for the router cluster to which router 410-1 belongs. The router 410-1 based on a determination that the user enters a command via the CLI 413 while the CLI 413 is in the router cluster management mode, executes the command on the router 410-1 and sends the command to at least a portion of the other routers 410-2 - 410-5 of the router cluster for execution (illustratively, in the example of FIG. 4, the command is sent to each of the other routers 410-2 - 410-5 of the router cluster), determines a command result based on a local command result determined by the router 410-1 based on execution of the command on the router 410-1 and based on command responses received by the router 410-1 based on execution of the command on ones of the other routers 410-2-410-5 of the router cluster, and presents the command result to the user via the CLI 413 of the router 410-1.

The router 410-1, based on a determination that the user enters a command via the CLI 413 while the CLI 413 is in the router cluster management mode, executes the command on the router 410-1 and determines a local command result based on execution of the command on the router 410-1.

The router 410-1, based on a determination that the user enters a command via the CLI 413 while the CLI 413 is in the router cluster management mode, sends the command to at least a portion of the other routers 410-2 - 410-5 of the router cluster for execution. The router 410-1, based on a determination that the user enters a command via the CLI 413 while the CLI 413 is in the router cluster management mode, identifies the other routers 410-2-410-5 that are part of the router cluster, determines which of the other routers 410-2 - 410-5 of the router cluster to which the command is to be sent, and sends the command to those other routers 410-2 - 410-5 of the router cluster to which the command is to be sent. It will be appreciated that the command may be sent to all of the other routers 410-2 - 410-5 of the router cluster or to a subset of the other routers 410-2 - 410-5 of the router cluster.

The router 410-1 may identify the other routers 410-2-410-5 of the router cluster in various ways. For example, the router 410-1 may identify the other routers 410-2-410-5 of the router cluster based on router cluster membership information maintained at the router 410-1 (e.g., as presented with respect to FIG. 2).

The router 410-1 may determine which of the other routers 410-2-410-5 of the router cluster to which the command is to be sent in various ways. For example, the router 410-1 may determine which of the other routers 410-2-410-5 of the router cluster to which the command is to be sent based on the command entered by the user (e.g., the user may specify that the command is intended for all of the routers 410 of the router cluster, may identify specific ones of the routers 410 of the router cluster for which the command is intended, or the like), based on status information associated with the routers 410 of the router cluster (e.g., the command is only provided to other routers 410 of the router cluster that are reachable at the time that the command is entered via the CLI 413), or the like, as well as various combinations thereof.

The router 410-1 may send the command to those other routers 410-2 - 410-5 of the router cluster to which the command is to be sent in various ways. For example, router 410-1 may send the command to those other routers 410-2 - 410-5 of the router cluster to which the command is to be sent based on use of remote procedure calls from the router 410-1 to each of the other routers 410-2 - 410-5 of the router cluster to which the command is to be sent. It will be appreciated that the remote procedure calls may be based on gRPC or other suitable remote procedure call protocols.

The other routers 410-2 - 410-5 of the router cluster to which the command is sent by the router 410-1 each receive the command from the router 410-1, execute the command, determine a local command result based on execution of the command, and send the local command result to the router 410-1 in response to the command.

The router 410-1 determines a command result for the command and presents the command result to the user via the CLI 413 of the router 410-1. The router 410-1 determines the command result based on the local command result determined at the router 410-1 based on execution of the command at the router 410-1 and based on the local command results received from the other routers 410-2 - 410-5 of the router cluster to which the command was sent based on execution of the command on the other routers 410-2 - 410-5 of the router cluster to which the command was sent. The command result may be determined based on a concatenation of the local command results of the routers 410 of the router cluster on which the command was executed. It will be appreciated that the command result for the command may depend on the type of command that was executed (e.g., concatenated query results where the command was a query, concatenated route configuration results where the command was a route configuration command, or the like).

The router 410-1 may perform authorization and accounting for commands entered via the CLI 413 both while the CLI is not operating in the router cluster management mode as well as while the CLI 413 is operating in the router cluster management mode. In this manner, the commands entered by the user via the CLI 413, including commands operating at the router cluster level, are authorized and accounted by the AAA server 420. The router 410-1 sends a command entered by the user via the CLI 413 to the AAA server 420 for authorization and accounting. The AAA server 420 receives the command from the router 410-1 and performs authorization and accounting for the command. For authorization of a command entered via the CLI 413 while the CLI 413 is operating in the cluster management mode, the AAA server 420 determines whether execution of the command by the user is authorized and provides to the router 410-1 a response indicative as to whether execution of the command by the user is authorized. The authorization of the command entered by the user via the CLI 413 may be based on command authorization information provided by the router 410 to the AAA server 420 for use in determining whether execution of the command on the router 410 is authorized (e.g., the command, a user identifier of user, a user session identifier of a user session of user, a terminal type via which the user accessed the CLI 413 (e.g., console, telnet, SSH, or the like), or the like, as well as various combinations thereof). The router 410-1, based on a response from the AAA server 420 that is indicative that the user is authorized to execute the command, initiates executes the command for the router cluster. The router 410-1, based on a response from the AAA server 420 that is indicative that the user is not authorized to execute a command, prevents execution of the command for the router cluster and may provide an indication to the user via the CLI 413 that the command was not executed due to lack of authorization. The AAA server 420 also performs accounting for the command entered by the user via the CLI 413 for maintaining a record of user activity on the router 410-1 and user activity in operating on the router cluster via the router 410-1 (e.g., commands entered, commands executed after being authorized, commands not execute after authorization was denied, and so forth), which may be used for various activity tracking purposes (e.g., auditing, analysis, or the like). The router 410-1 also may perform accounting for the command entered by the user via the CLI 413 for maintaining a local record of user activity on the router 410-1 and user activity in operating on the router cluster via the router 410-1.

It will be appreciated that the routers 410 of the router cluster may be configured to support various other functions for supporting router cluster management.

It will be appreciated that, although primarily presented herein within the context of supporting device management clustering for a particular type of device (namely, a router), various possibilities for supporting device management clustering for a router that are presented herein may be used or adapted for use in supporting device management clustering for other types of devices (e.g., switches, servers, or any other devices which may be grouped for various purposes). As such, as discussed further below, various more general embodiments are further presented with respect to FIGs. 5-7.

FIG. 5 depicts a method for use by a router in supporting router management for a router management cluster. It will be appreciated that, although primarily presented as being performed serially, at least a portion of the functions of method 500 may be performed contemporaneously or in a different order than as presented with respect to FIG. 5. At block 501, method 500 begins. At block 510, execute, at a router of a router cluster, a command entered via an interfaceof the router. At block 520, send, by the router toward one or more other routers of the router cluster based on the interface of the router operating in a cluster management mode, the command entered via the interface of the router. At block 599, method 500 ends. It will be appreciated that various functions presented with respect to FIG. 4 may be implemented within the context of method 500 of FIG. 5.

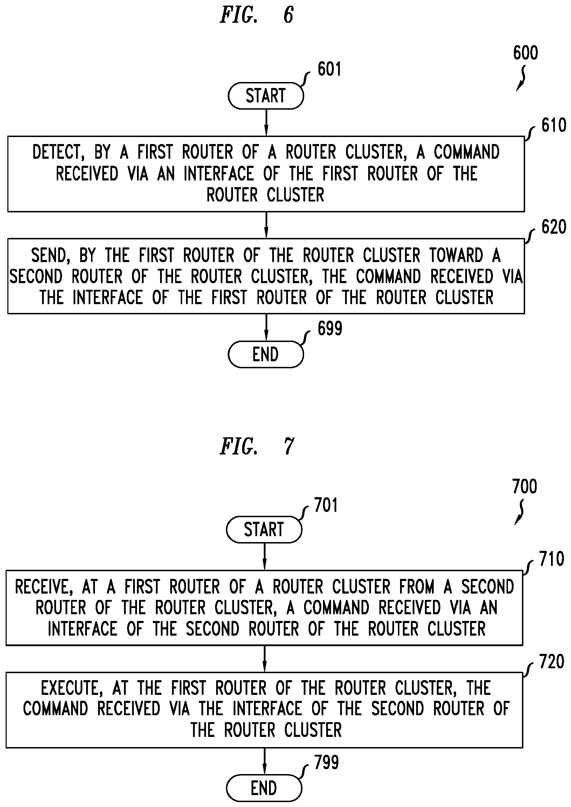

FIG. 6 depicts a method for use by a router in supporting router management for a router management cluster. It will be appreciated that, although primarily presented as being performed serially, at least a portion of the functions of method 600 may be performed contemporaneously or in a different order than as presented with respect to FIG. 6. At block 601, method 600 begins. At block 610, detect, by a first router of a router cluster, a command received via an interface of the first router of the router cluster. At block 620, send, by the first router of the router cluster toward a second router of the router cluster, the command received via the interface of the first router of the router cluster. At block 699, method 600 ends. It will be appreciated that various functions presented with respect to FIG. 4 may be implemented within the context of method 600 of FIG. 6.

FIG. 7 depicts a method for use by a router in supporting router management for a router management cluster. It will be appreciated that, although primarily presented as being performed serially, at least a portion of the functions of method 700 may be performed contemporaneously or in a different order than as presented with respect to FIG. 7. At block 701, method 700 begins. At block 710, receive, at a first router of a router cluster from a second router of the router cluster, a command received via an interface of the second router of the router cluster. At block 720, execute, at the first router of the router cluster, the command received via the interface of the second router of the router cluster. At block 799, method 700 ends. It will be appreciated that various functions presented with respect to FIG. 4 may be implemented within the context of method 700 of FIG. 7.

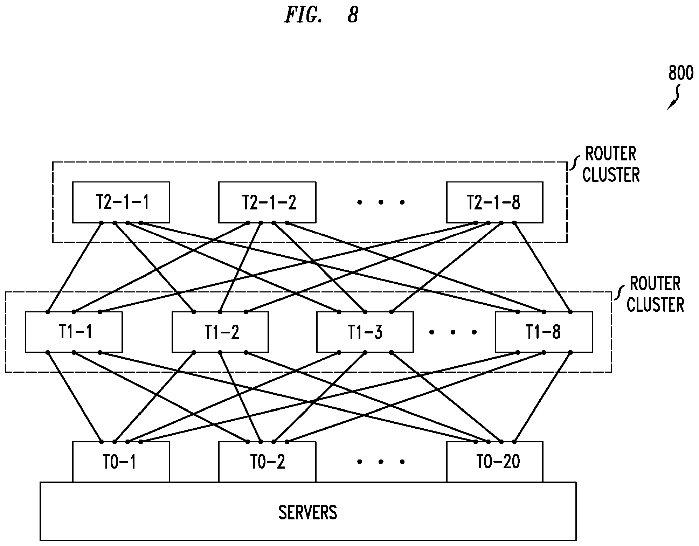

It will be appreciated that, although primarily presented herein within the context of use of embodiments of router management clustering within a particular type of communication network (e.g., a network operator network) having a particular network topology (e.g., mesh), various embodiments of router management clustering may be used within various other types of communication networks (e.g., Enterprise networks, datacenter networks, or the like) having various other network topologies (e.g., tree, spine-and-leaf, or the like). An example illustrating use of router management clustering within a datacenter communication network using a spine-and-leaf topology is presented with respect to FIG. 8.

FIG. 8 depicts a communication network configured to use router management clustering for router management. The communication network 800 is a datacenter communication network having a hierarchical spine-and-leaf router topology supporting communications of a set of underlying servers. The spine-and-leaf router topology of includes three layers of routers, including a first layer (denoted as servers T0-1 through T0-20) connected to the servers, a second layer (denoted as servers T1-1 through T1-8) in full mesh connectivity with the first layer, and a third layer (denoted as servers T2-1-1 through T2-1-8) in full mesh connectivity with the second layer. The spine-and-leaf router topology has been configured such that the routers at the second layer of the spine-and-leaf router topology are associated as part of a first router cluster (and, thus, may be controlled as a group based on access to only one of those routers) and, similarly, such that the routers at the third layer of the spine-and-leaf router topology are associated as part of a second router cluster (and, thus, may be controlled as a group based on access to only one of those routers). It will be appreciated that use of router clustering to control a group of routers at a particular hierarchical level of such a spine-and-leaf topology may provide significant advantages given that operations performed on the routers at any given layer of such a such spine-and-leaf topology may be similar given the similar contexts of the routers at any given layer of the such spine-and-leaf topology. It also will be appreciated that such advantages may be realized for other topologies and other types of communication networks based on organization of routers into router clusters based on similarity of routers (e.g., in terms of network context, functions supported or performed, or the like, as well as various combinations thereof).

It will be appreciated, although primarily presented herein within the context of example embodiments for supporting device management clustering for routers, various example embodiments presented herein may be used or adapted for use in supporting device management clustering for various other types of devices (e.g., switches, servers, or the like). Accordingly, various references herein to routers and associated router-related terms may be read more generally, for at least some example embodiments, as being references to devices (e.g., routers, switches, servers, or the like) and associated device-related terms.

The device management clustering may provide various advantages or potential advantages. For example, the device management clustering may enable a set of multiple devices to be controlled by a user based on authentication of the user to access only one of the devices in the set of multiple devices, thereby enabling the user to control other devices in the set of multiple devices without a need to explicitly log into those other devices in order to be authenticated to control those other devices. For example, the device management clustering may be considered to provide a virtual device concept at the device interface level (e.g., text-based interface level, such as at a CLI level) since access to a single interface of a single device enables operations on a set of multiple devices including that single device that is accessed and other devices that are part of the same device management cluster. The device management clustering may provide various other advantages or potential advantages.

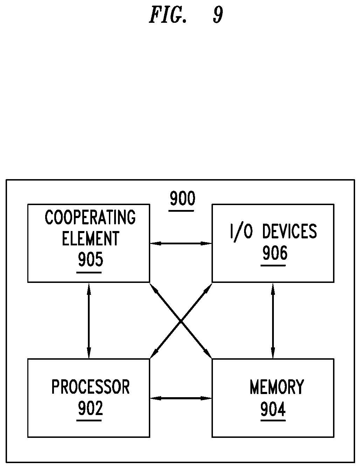

FIG. 9 depicts a computer suitable for use in performing various functions described herein.

The computer 900 includes a processor 902 (e.g., a central processing unit, a processor having a set of processor cores, a processor core of a processor, or the like) and a memory 904 (e.g., a random access memory, a read only memory, or the like). The processor 902 and the memory 904 may be communicatively connected. The computer 900 may include at least one processor and at least one memory including program code, wherein the at least one memory and the program code are configured to, with the at least one processor, cause the computer to perform various functions presented herein.

The computer 900 also may include a cooperating element 905. The cooperating element 905 may be a hardware device. The cooperating element 905 may be a process that can be loaded into the memory 904 and executed by the processor 902 to implement functions as discussed herein (in which case, for example, the cooperating element 905 (including associated data structures) can be stored on a non-transitory computer-readable storage medium, such as a storage device or other storage element (e.g., a magnetic drive, an optical drive, or the like)).

The computer 900 also may include one or more input/output devices 906. The input/output devices 906 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 900 may represent a general architecture and functionality suitable for implementing functional elements described herein, portions of functional elements described herein, or the like, as well as various combinations thereof. For example, computer 900 may provide a general architecture and functionality that is suitable for implementing one or more elements presented herein, such as a router 112 or a portion thereof, a management element 113 or a portion thereof, a management device 120 or a portion thereof, a management element 121 or a portion thereof, a router 212 or a portion thereof, a management device 220 or a portion thereof, a router 410 or a portion thereof, a cluster management element

415 or a portion thereof, a device or a portion thereof configured to execute method 300, a device or a portion thereof configured to execute method 500, a device or a portion thereof configured to execute method 600, a device or a portion thereof configured to execute method 700, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

## Claims

1. An apparatus (120, 220, 900), comprising:
at least one processor (902); and
at least one memory (904) including program code;
wherein the at least one memory and the program code are configured to, with the at least one processor, cause the apparatus to at least:
maintain (310), by a device of a device cluster (230) including a set of devices, device cluster membership information indicative of device membership of the device cluster; said apparatus being **characterized in that** it is further caused to
support (320), by the device, communication with one or more neighboring devices to support distribution of the device cluster membership information indicative of device membership of the device cluster, comprising receiving, by the device from one of the one or more neighboring devices, an indication that the one of the one or more neighboring devices is a member of the device cluster and updating, by the device, the device cluster membership information to indicate that the one of the one or more neighboring devices is a member of the device cluster.

2. The apparatus according to claim 1, wherein the device cluster membership information indicative of device membership of the device cluster includes device cluster identity information indicative that the device is a member of the device cluster.

3. The apparatus according to claim 2, wherein the device cluster identity information indicative that the device is a member of the device cluster is configured at the device based on zero-touch provisioning.

4. The apparatus according to any of claims 2 to 3, wherein, to support communication with one or more neighboring devices to support distribution of the device cluster membership information, the at least one memory and the program code are configured to, with the at least one processor, cause the apparatus to at least:
send, by the device toward the one or more neighboring devices, the device cluster identity information indicative that the device is a member of the device cluster.

5. The apparatus according to any of claims 1 to 4, wherein, to support communication with one or more neighboring devices to support distribution of the device cluster membership information, the at least one memory and the program code are configured to, with the at least one processor, cause the apparatus to at least:
send, by the device toward at least one of the one or more neighboring devices, the indication that the one of the one or more neighboring devices is a member of the device cluster.

6. The apparatus according to any of claims 1 to 5, wherein the distribution of the device cluster membership information indicative of device membership of the device cluster is based on a link layer advertising protocol.

7. The apparatus according to any of claims 1 to 6, wherein the device cluster is configured to be managed based on login to a single device of the device cluster.

8. The apparatus according to any of claims 1 to 7, wherein the device cluster includes a cluster of routers.

9. A method (300), comprising:
maintaining (310), by a device of a device cluster (230) including a set of devices, device cluster membership information indicative of device membership of the device cluster;
**characterized by**
supporting (320), by the device, communication with one or more neighboring devices for supporting distribution of the device cluster membership information indicative of device membership of the device cluster comprising receiving, by the device from one of the one or more neighboring devices, an indication that the one of the one or more neighboring devices is a member of the device cluster and updating, by the device, the device cluster membership information to indicate that the one of the one or more neighboring devices is a member of the device cluster.

## Patentansprüche

1. Einrichtung (120, 220, 900), die Folgendes umfasst:
mindestens einen Prozessor (902); und
mindestens einen Speicher (904), der einen Programmcode beinhaltet;
wobei der mindestens eine Speicher und der Programmcode dazu ausgelegt sind, die Einrichtung mit dem mindestens einen Prozessor mindestens zu Folgendem zu veranlassen:
Führen (310) von Informationen über eine Vorrichtungsclustermitgliedschaft, die eine Vorrichtungsmitgliedschaft eines Vorrichtungsclusters anzeigen, durch die Vorrichtung des Vorrichtungsclusters (230), der einen Satz von Vorrichtungen beinhaltet; wobei die Einrichtung **dadurch gekennzeichnet ist, dass** sie ferner zu Folgendem veranlasst wird
Unterstützen (320) einer Kommunikation mit einer oder mehreren benachbarten Vorrichtungen durch die Vorrichtung, um eine Verteilung der Informationen über eine Vorrichtungsclustermitgliedschaft, die die Vorrichtungsmitgliedschaft des Vorrichtungsclusters anzeigen, zu unterstützen, was das Empfangen einer Anzeige, dass eine der einen oder mehreren benachbarten Vorrichtungen ein Mitglied des Vorrichtungsclusters ist, durch die Vorrichtung von der einen der einen oder der mehreren benachbarten Vorrichtungen und das Aktualisieren der Informationen über die Vorrichtungsclustermitgliedschaft durch die Vorrichtung umfasst, um anzuzeigen, dass die eine der einen oder der mehreren benachbarten Vorrichtungen ein Mitglied des Vorrichtungsclusters ist.

2. Einrichtung nach Anspruch 1, wobei die Informationen über eine Vorrichtungsclustermitgliedschaft, die eine Vorrichtungsmitgliedschaft des Vorrichtungsclusters anzeigen, Informationen über eine Vorrichtungsclusteridentität beinhalten, die anzeigen, dass die Vorrichtung ein Mitglied des Vorrichtungsclusters ist.

3. Einrichtung nach Anspruch 2, wobei die Informationen über eine Vorrichtungsclusteridentität, die anzeigen, dass die Vorrichtung ein Mitglied des Vorrichtungsclusters ist, auf Basis einer Zero-Touch-Bereitstellung an der Vorrichtung ausgelegt sind.

4. Einrichtung nach einem der Ansprüche 2 bis 3, wobei der mindestens eine Speicher und der Programmcode zum Unterstützen einer Kommunikation mit einer oder mehreren benachbarten Vorrichtungen zum Unterstützen einer Verteilung der Informationen über eine Vorrichtungsclustermitgliedschaft dazu ausgelegt sind, die Einrichtung mit dem mindestens einen Prozessor mindestens zu Folgendem zu veranlassen:
Senden der Informationen über eine Vorrichtungsclusteridentität, die anzeigen, dass die Vorrichtung ein Mitglied des Vorrichtungsclusters ist, durch die Vorrichtung an die eine der einen oder der mehreren benachbarten Vorrichtungen.

5. Einrichtung nach einem der Ansprüche 1 bis 4, wobei der mindestens eine Speicher und der Programmcode zum Unterstützen einer Kommunikation mit einer oder mehreren benachbarten Vorrichtungen zum Unterstützen einer Verteilung der Informationen über eine Vorrichtungsclustermitgliedschaft dazu ausgelegt sind, die Einrichtung mit dem mindestens einen Prozessor mindestens zu Folgendem zu veranlassen:
Senden der Anzeige, dass die eine der einen oder der mehreren benachbarten Vorrichtungen ein Mitglied des Vorrichtungsclusters ist, durch die Vorrichtung an mindestens eine der einen oder der mehreren benachbarten Vorrichtungen.

6. Einrichtung nach einem der Ansprüche 1 bis 5, wobei die Verteilung der Informationen über eine Vorrichtungsclustermitgliedschaft, die eine Vorrichtungsmitgliedschaft des Vorrichtungsclusters anzeigen, auf einem Advertising Protocol der Verbindungsschicht basiert.

7. Einrichtung nach einem der Ansprüche 1 bis 6, wobei der Vorrichtungscluster dazu ausgelegt ist, auf Basis einer Anmeldung bei einer einzelnen Vorrichtung des Vorrichtungsclusters verwaltet zu werden.

8. Einrichtung nach einem der Ansprüche 1 bis 7, wobei der Vorrichtungscluster einen Cluster von Routern beinhaltet.

9. Verfahren (300), das Folgendes umfasst:
Führen (310) von Informationen über eine Vorrichtungsclustermitgliedschaft, die eine Vorrichtungsmitgliedschaft eines Vorrichtungsclusters anzeigen, durch eine Vorrichtung des Vorrichtungsclusters (230), der einen Satz von Vorrichtungen beinhaltet;
**gekennzeichnet durch**
Unterstützen (320) einer Kommunikation mit einer oder mehreren benachbarten Vorrichtungen durch die Vorrichtung, um eine Verteilung der Informationen über eine Vorrichtungsclustermitgliedschaft, die die Vorrichtungsmitgliedschaft des Vorrichtungsclusters anzeigen, zu unterstützen, was das Empfangen einer Anzeige, dass eine der einen oder mehreren benachbarten Vorrichtungen ein Mitglied des Vorrichtungsclusters ist, durch die Vorrichtung von der einen der einen oder der mehreren benachbarten Vorrichtungen und das Aktualisieren der Informationen über die Vorrichtungsclustermitgliedschaft durch die Vorrichtung umfasst, um anzuzeigen, dass die eine der einen oder der mehreren benachbarten Vorrichtungen ein Mitglied des Vorrichtungsclusters ist.

## Revendications

1. Appareil (120, 220, 900), comprenant :
au moins un processeur (902); et
au moins une mémoire (904) comportant un code de programme ;
dans lequel la au moins une mémoire et le code de programme sont configurés pour, avec le au moins un processeur, amener l'appareil à au moins :
conserver (310), par un dispositif d'une grappe de dispositifs (230) comportant un ensemble de dispositifs, des informations d'appartenance de grappe de dispositifs indiquant une appartenance de dispositif de la grappe de dispositifs ; ledit appareil étant **caractérisé en ce qu'**il est en outre amené à
prendre en charge (320), par le dispositif, la communication avec un ou plusieurs dispositifs voisins pour prendre en charge la distribution des informations d'appartenance de grappe de dispositifs indiquant une appartenance de dispositif de la grappe de dispositifs, comprenant la réception, par le dispositif d'un dispositif des un ou plusieurs dispositifs voisins, d'une indication selon laquelle le dispositif des un ou plusieurs dispositifs voisins est membre de la grappe de dispositifs, et la mise à jour, par le dispositif, des informations d'appartenance de grappe de dispositifs pour indiquer que le dispositif des un ou plusieurs dispositifs voisins est membre de la grappe de dispositifs.

2. Appareil selon la revendication 1, dans lequel les informations d'appartenance de grappe de dispositifs indiquant une appartenance de dispositif de la grappe de dispositifs comportent des informations d'identité de grappe de dispositifs indiquant que le dispositif est membre de la grappe de dispositifs.

3. Appareil selon la revendication 2, dans lequel les informations d'identité de grappe de dispositifs indiquant que le dispositif est membre de la grappe de dispositifs sont configurées au niveau du dispositif sur la base d'un provisionnement sans contact.

4. Appareil selon l'une des revendications 2 à 3, dans lequel, pour prendre en charge la communication avec un ou plusieurs dispositifs voisins pour prendre en charge la distribution des informations d'appartenance de grappe de dispositifs, la au moins une mémoire et le code de programme sont configurés pour, avec le au moins un processeur, amener l'appareil à au moins :
envoyer aux un ou plusieurs dispositifs voisins, par le dispositif, les informations d'identité de grappe de dispositifs indiquant que le dispositif est membre de la grappe de dispositifs.

5. Appareil selon l'une des revendications 1 à 4, dans lequel, pour prendre en charge la communication avec un ou plusieurs dispositifs voisins pour prendre en charge la distribution des informations de l'appartenance à une grappe de dispositifs, la au moins une mémoire et le code de programme sont configurés pour, avec le au moins un processeur, amener l'appareil à au moins :
envoyer à au moins un des un ou plusieurs dispositifs voisins, par le dispositif, l'indication selon laquelle le dispositif des un ou plusieurs dispositifs voisins est membre de la grappe de dispositifs.

6. Appareil selon l'une des revendications 1 à 5, dans lequel la distribution des informations d'appartenance de grappe de dispositifs indiquant une appartenance de dispositif de la grappe de dispositifs est basée sur un protocole de publicité de couche de liaison.

7. Appareil selon l'une des revendications 1 à 6, dans lequel la grappe de dispositifs est configurée pour être gérée sur la base de la connexion à un seul dispositif de la grappe de dispositifs.

8. Appareil selon l'une des revendications 1 à 7, dans lequel la grappe de dispositifs comporte une grappe de routeurs.

9. Procédé (300), comprenant :
la conservation (310), par un dispositif d'une grappe de dispositifs (230) comportant un ensemble de dispositifs, d'informations d'appartenance de grappe de dispositifs indiquant une appartenance de dispositif de la grappe de dispositifs ; **caractérisé par**
la prise en charge (320), par le dispositif, de la communication avec un ou plusieurs dispositifs voisins pour prendre en charge la distribution des informations d'appartenance de grappe de dispositifs indiquant une appartenance de dispositif de la grappe de dispositifs comprenant la réception, par le dispositif d'un dispositif des un ou plusieurs dispositifs voisins, d'une indication selon laquelle le dispositif des un ou plusieurs dispositifs voisins est membre de la grappe de dispositifs, et la mise à jour, par le dispositif, des informations d'appartenance de grappe de dispositifs pour indiquer que le dispositif des un ou plusieurs dispositifs voisins est membre de la grappe de dispositifs.
